# EUROPEAN PATENT SPECIFICATION

(11) **EP 2 949 446 B1**
(45) Date of publication and mention of the grant of the patent: **26.02.2025**
(21) Application number: 14170067.4
(22) Date of filing: 27.05.2014
(51) Int. Cl.: B29C 44/56, B29C 59/16, G10K 11/16, B60R 13/08

(54) **Method for creating a porous sound absorbing surface in a moulded vehicle part, and a cover**
Verfahren zur Erzeugung einer porösen schallschluckenden Oberfläche in einem geformten Fahrzeugteil, und Deckel
Procédé de création d'une surface d'absorption phonique poreuse dans une partie de véhicule moulée et couvercle

(43) Date of publication of application: 02.12.2015
(73) Proprietor: Volvo Car Corporation, 40531 Göteborg (SE)
(72) Inventor: Holmström, Mikael, 43931 Onsala (SE)
(74) Representative: Kransell & Wennborg KB

(56) References cited:
- DE-A1- 102005 012 720
- US-A1- 2001 036 970
- US-B1- 6 820 720

## Description

### Technical field

The present invention relates generally to a method according to claim 1 and a cover according to claim 5.

### Background art

A main interest within the vehicle industry is to obtain vehicles which produce a low sound level, both for the persons located outside the vehicle as well as for driver and passengers within the vehicle coupé. This to achieve a minimum of environmental sound and hence riding comfort for the driver and the passengers.

There are many sound creating sources related to vehicles e.g. the engine, supercharger, drive belts, transmission, wheel and axle bearings, tires, exhaust system, external noise from road surface, wind noise, exhaust system, suspension, shock absorbers etc.

When air borne sound is to be absorbed or isolated, the sound absorbing material has to have an isolating function, so that the sound/energy waves may pierce through the surface and into the material. The sound isolation material shall not have a hard surface which reflects the sound waves. The sound isolating material shall rather have a soft surface and beneath that a soft and porous core which enables the sound waves to penetrate into the isolation material wherein the energy from the sound waves is transformed into thermal energy.

In prior art it is known to encase vehicle pieces e.g. an engine within a cover made from a moulded sheet of plastic, which on its inside is dressed with an isolating material. In prior art the cover and its isolating material is placed at a distance from the engine. The surface of the isolating material which was facing e.g. the engine had a hard surface. This sound absorbing solution works well as long as the plastic cover and its sound absorbing material is placed at a distance from the engine. Prior art document US 2001/0036970A1 discloses a method for making cellular acoustic absorption polymer foam having improved thermal insulating performance comprising: (A) Providing a polymer foam having an average cell size in the range from about 1.5 mm to about 4 mm and an open cell content not greater than about 40 percent measured according to ASTM D2856, Procedure A, and (B) Perforating the polymer foam provided in step (A) at a surface of the polymer foam to form a multiplicity of perforation channels extending from that surface into the polymer foam such that the open cell content of the foam measured according to ASTM D2856, Procedure A, is increased relative to the step (A) polymer foam by at least about 10 percent to obtain a perforated polymer foam having an open cell content of at least about 20 percent, measured according to ASTM D2856, Procedure A.

In the vehicle industry the available free space within vehicles is limited due to more and more details and systems that shall be mounted on an already fixed and limited free space. When the space between the casing and its sound absorbing material shall be limited, the sound absorbing material is placed in the vicinity to or to abut against e.g. the engine. If this solution is used and placed in the vicinity or to abut against the vehicle component, this will have the drawback that the sound absorbing properties is moderate since the sound waves cannot pierce into the soft and porous core of the sound absorbing material. Instead of being absorbed by the sound absorbing material the sound waves will bounce back and forth between the hard surfaces on the engine and the inside of the sound absorbing cover. Thus the sound waves will not ebb out and the sound level within the engine compartment will continue to be high and not dampened.

### Summary of invention

An object of the present invention is to improve the sound absorbing properties of polymers used in vehicles as sound absorbers.

The above problem has been solved by a method according to the appended claims. The method creates a porous sound absorbing surface of a moulded vehicle part made of a polymer material with a moulded skin comprising the steps:
removing at least a part of the moulded skin of the polymer material from the moulded vehicle part with the aid of the laser beam emitted from the laser unit. The removal of the moulded skin uncovers the soft and porous core of the moulded vehicle part which makes it possible for the sound waves to penetrate into the isolation material wherein the energy from the sound waves is transformed into thermal energy. The method is performed on the moulded skin of the moulded vehicle part which is to be positioned in use to facing the vehicle component from which the sound which is to be absorbed or dampened is emitted.

The laser unit emits a laser beam which is controlled by a control unit which laser beam can be programmed to be swept over the moulded skin to perform a treatment by which the moulded skin of the moulded vehicle part is removed. The size of exposed envelop surface of the core of the moulded vehicle part determines which frequency of the sound waves that are dampened. The area of the exposed envelop surface of the core correspond to a certain frequency that is to be dampened.

The outer or inner moulded skin that is not partially or completely removed and/or perforated shall constitute a homogenous moulded skin.

The polymer material comprises polyurethane. Polyurethane is used since it is possible to shape the moulded skin by burning off by the aid of a laser beam.

Also claimed is a cover manufactured according to the method described above. The cover is used in a vehicle for absorbing sound and noise from the surrounding and its operative components. The cover comprises, an outer moulded skin and an inner moulded skin which is to be positioned in use facing a vehicle component from which the sound which is to be absorbed or dampened is emitted, and a core provided between the outer and inner moulded skins. The inner moulded skin is at least partially removed.

In another embodiment of the cover the inner moulded skin is completely removed.

In yet another embodiment of the cover, the inner moulded skin is perforated.

In yet another embodiment of the cover the inner moulded skin is completely removed and perforated.

In yet another embodiment of the cover the inner moulded skin is partially removed and perforated.

The inner moulded skin of the cover is removed and perforated with the aid of a laser beam.

A vehicle is provided with one or more of the covers.

The outer or inner surface that is not perforated shall constitute a homogenous moulded skin. The outer or inner moulded skin that is kept intact confines the sound waves into the core of the moulded vehicle part.

A vehicle may be provided with one or more covers.

### Brief description of drawings

The invention will be described in detail with reference to the accompanying drawings. It is to be understood that the drawings are designed solely for the purpose of illustration and are not intended as a definition of the limits of the invention, for which reference should be made to the appended claims. It should be further understood that the drawings are not necessarily drawn to scale and that unless otherwise indicated, they are merely intended to schematically illustrate the structures and procedures described herein.
Fig. 1 shows a section view of a vehicle part made of a sound absorbing material,
Fig. 2 shows a section view of the vehicle part made of the sound absorbing material in a machined state,
Fig. 3 shows a section view of the vehicle part made of the sound absorbing material in a another machined state, and
Fig. 4 shows a section view of the vehicle part made of the sound absorbing material in another machined state.

### Description of embodiments

In the description below, various directions will be given with reference to a vehicle oriented in driving position. Example of such directions can be inner, outer etc. In the following, a detailed description of a cover and the method for improving and/or creating sound absorbing properties in a moulded vehicle part 1 is described.

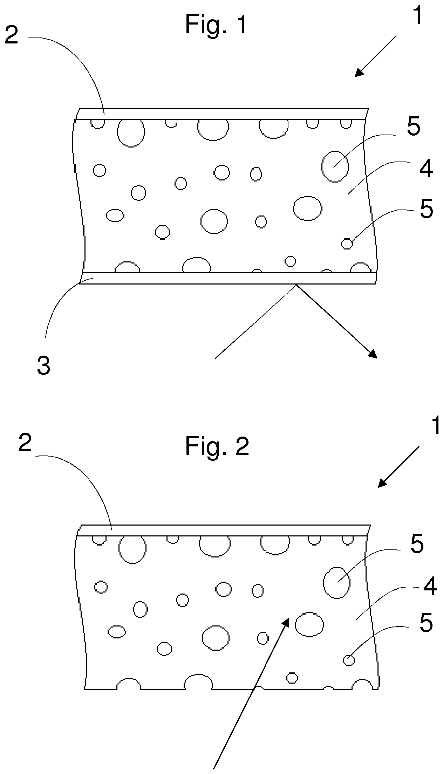

Fig. 1 shows a section view of a vehicle part 1 made of a sound absorbing material. The vehicle part 1 is provided with an outer moulded skin and an inner moulded skin 2, 3. The inner moulded skin 3 is construed to abut against the vehicle component from which the sound or noise which is to be absorbed is generated. The inner moulded skin 3 of the moulded vehicle part is preferably formed with the same outer shape as the vehicle component which it shall abut against, thus the shapes is complementary to each other.

The vehicle part 1 is preferably made in one piece by a mould process. When the moulded vehicle part 1 is produced a moulded skin is all over its surfaces. In fig. 1 the moulded skins 2, 3 are shown. Between the moulded skins 2, 3 a core 4 is provided.

The moulded vehicle part 1 is made from a polymer e.g. polyurethane. The core 4 within a polymer material is thus soft and contains pores 5, which makes it an excellent sound absorber. The pores 5 are of varied shape and size. A high porosity within the material with a retained material stiffness is desired. A condensation of the material is formed at the surface of the material which condensation is formed during the moulding process. The condensation of the surface material is also mentionedas moulded skin in the description below.

In fig. 1 one of several sound waves is illustrated as an arrow, which will hit and bounce against the inner moulded skin 3 as long as it is not removed

Fig. 2 shows the section view of the moulded vehicle part 1 in another machined state. In Fig. 2 it is shown that the inner moulded skin 3 is totally removed, but it may also be partially removed. The inner moulded skin 3 is removed with the aid of a laser beam as described below. The inner moulded skin 3 is removed, this to uncover the core 4 so that the sound waves and its wave energy may penetrate into the core 4 and be transformed to thermal energy within the material.

Here the sound wave shown with an arrow will penetrate into the core 4 and be absorbed, and thus the sound is dampened.

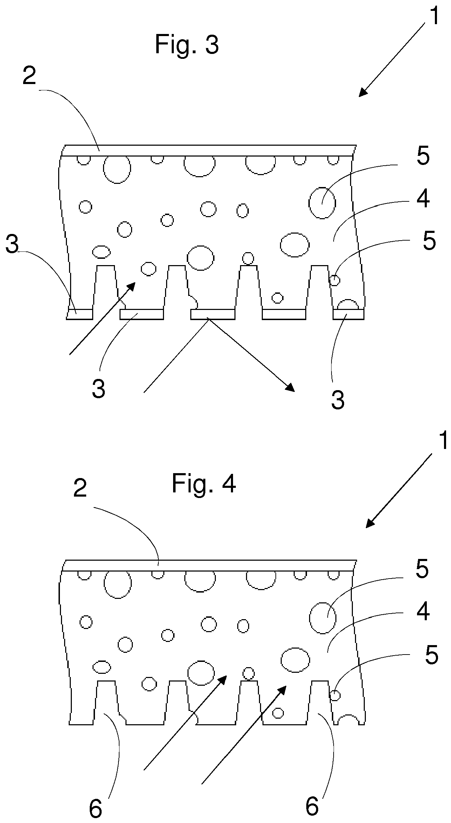

Fig. 3 shows the section view of the moulded vehicle part 1 in another machined state. In fig. 3 perforations or holes 6 are made in the inner moulded skin 3. The perforations or holes 6 extend into the core 4 of the vehicle part 1. The perforations or holes 6 are blind holes or perforations. The core 4 and its soft and porous material are thus uncovered, this to allow the sound waves to penetrate into the soft and porous core 4 and be absorbed. The purpose with the holes or perforations 6 is to enlarge the exposed surface of the core 4 this to maximize the sound absorbing envelope surface of the core 4. The inner surfaces of the holes or perforations are also counted into the envelop surface of the exposed core. The amount of sound waves the core 4 may absorb depend on the size of the exposed surface of the core 4. The larger envelop surface the more sound waves the core 4 may absorb. The sound absorbing properties of the core 4 is thus dependent upon the exposed surface of the soft and porous core 4 and the lengths, widths and geometrical shape of the perforations and/or holes 6.

The lengths, widths and the geometrical shapes of the perforations and/or holes 6 determine which wave length/frequency of the sound waves that are dampened. The sizes, forms and depths of the perforations may be altered to achieve specific absorbing properties. The perforations are tuned depending on which frequency that is to be dampened. Frequencies in the interval of 500-4000Hz may be dampened. The tuning of the perforations towards a certain frequency is made with a certain depth of the perforations which depth corresponds to a certain frequency which is to be dampened. The size of the perforated envelope area depend also on which material stiffness that is desired. The more perforations by each area unit the lower material stiffness, and the less perforations by each area unit the higher material stiffness. The size of the perforated envelope area depend also on the desired material stiffness.

In fig. 4 two sound waves are shown with arrows. One of the arrows shown in fig. 3 penetrates into the core 4, since the inner moulded skin 3 is removed, and one of the sound waves bounces against the inner moulded skin 3, since it is not removed from that area of the vehicle part 1.

Fig. 4 shows the section view of the moulded vehicle part 1 in another machined state. Fig. 4 shows mainly the same as fig. 3, except that in fig. 4 the inner moulded skin 3 is also removed. The inner moulded skin shown in Fig. 4 may be partially or entirely removed from the parts of the vehicle part 1 which are not provided with perforations and/or holes 6. The perforations or holes may be formed in those parts of the vehicle part that have a removed inner moulded skin or in the intact moulded skin.

In fig. 1-4 the inner moulded skin 3 is partially or completely removed and/or perforated. But in another embodiment it may be the outer moulded skin 2 that is partially or completely removed and/or perforated.

The shown arrows in Fig. 4 penetrates into the core 4, since the inner moulded skin 3 is removed on those areas where the sound waves hit the soft and porous core.

The geometrical shape of the perforations/holes 6 shown in fig. 3 and 4 are slightly tapered. But the geometrical shape of the perforations/holes 6 may have whichever shape that is desired such as cylindrical, rectangular, conical etc..

The vehicle part 1 made of a sound absorbing material is manufactured of a moulded polymer whose surface is covered with a moulded skin 2, 3. The inner moulded skin of the vehicle part 1 is machined with a laser based method. The aim of the method is to remove the mold skin partially or completely. Another aim of the method is to increase the envelop surface of the soft and porous core 4, this to be able to absorb more of the sound waves. Thus the greater envelop surface the greater amount of sound waves may be absorbed.

The moulded vehicle part 1 is placed and fixed on a fixture in a laser machining apparatus. The laser machining apparatus comprises a laser unit which is aimed towards a moulded skin of the vehicle part 1 and emits a laser beam or laser pulses which remove moulded skin 2, 3 from the moulded vehicle part 1. The laser beam or laser pulses remove at least a part of the moulded skin of the polymer material from the vehicle part 1.

The moulded vehicle part 1 is preferably manufactured of only one polymer but may also be manufactured of a composition of two or more polymers. The perforations or the removal of the moulded skin 2, 3 are done by evaporation, so that the polymer material does not begin to melt in an uncontrolled way. If that would be the case a new moulded skin 2, 3 with a hard surface would be created. Thus the soft and porous core 4 would not be exposed, instead a new moulded skin 2, 3 would be created and restrain the sound waves from entering into the core 4.

The method is performed on the surface of the moulded vehicle part 1 which is to be positioned in use to abut against or be turned towards the vehicle component from which the sound or noise is created.

To remove the surface coating in the form of the moulded skin 2, 3 the laser unit perform a laser nozzle treatment. The laser beam from the laser unit is controlled by a control unit which can be programmed to be swept over the surface and burn away at least a part of or the whole moulded skin 2, 3.

The mould material is a polymer such as polyurethane.

The moulded vehicle part may form a cover used in a vehicle to absorb sound and noise from the surrounding and its operative components. The cover comprises an outer and an inner moulded skin 2, 3. A core 4 is provided between the outer and inner moulded skins 2, 3.

In one embodiment the inner moulded skin 3 may be partially or completely removed. In another embodiment the inner moulded skin 3 may be perforated. In yet another embodiment the moulded skin 3 may be both partially or completely removed and perforated. The moulded skin is partially or completely removed and/or perforated with the aid of the laser beam or pulses.

The cover can be used in any desired area of the vehicle in which noise or sound is to be dampened or absorbed e.g. engine area, the interior areas, exterior areas etc..

Concerning the perforation operation, it is crucial that only one of the outer or inner moulded skins of the moulded part 1 is perforated. Thus the outer or inner moulded skin that is not perforated shall constitute a homogenous surface. This to encase the sound waves in the core 4. If the perforations should go through both the inner moulded skin 3, the core 4 and out through the outer moulded skin 2 it would let out the sound waves, which not is desirable.

A moulded vehicle part 1 which has an inner moulded skin 3 removed with the aid of perforations and/or partially or completely removed surface can enhace its sound absorbing properties with at least 50%.

## Claims

1. A method for creating a porous sound absorbing surface of a moulded vehicle part (1) made of a polymer material containing pores (5) with a moulded skin (2, 3), the moulded skin being defined as a condensation of the polymer material formed at the surface of the moulded vehicle part during the moulding process, the method comprising:
-removing at least a part of the moulded skin (2, 3) of the polymer material from the moulded vehicle part (1) with the aid of a laser beam emitted from a laser unit,
wherein the laser unit emits a laser beam which is controlled by a control unit, the laser beam being programmed to be swept over the moulded skin (2, 3) to perform a treatment by which the moulded skin (2, 3) of the moulded vehicle part (1) is partially or entirely removed from the parts of the vehicle part (1) which are not provided with perforations and/or holes (6), and wherein the method is performed on the moulded skin (2, 3) of the moulded vehicle part (1) which is to be positioned in use facing the vehicle component from which the sound which is to be absorbed or dampened is emitted.

2. Method according to claim 1, wherein the moulded vehicle part is a cover and the moulded skin comprises an outer moulded skin and an inner moulded skin, and wherein the removal of at least a part of the moulded skin comprises removing at least a part of the inner moulded skin, wherein the outer moulded skin (3) constitute a homogenous moulded skin.

3. Method according to claim 1, wherein the polymer material comprises polyurethane.

4. Method according to claim 1, wherein the removal of the moulded skin (2, 3) by the laser unit is achieved by evaporation, so that the polymer material does not melt in an uncontrolled way in order to avoid the forming of a new moulded skin having a hard surface.

5. A cover manufactured according to any one of claims 1-5 for absorbing sound and noise in a vehicle, comprising:
an outer moulded skin (2), and
an inner moulded skin (3) which is to be positioned in use facing a vehicle component from which the sound which is to be absorbed or dampened is emitted, and a core (4) provided between the outer and inner moulded skins (2, 3).

6. Cover according to claim 5, **characterized in** the inner moulded skin (3) is completely removed.

7. Cover according to claim 5, **characterized in that** the inner moulded skin (3) is perforated.

8. Cover according to claim 5, **characterized in that** the inner moulded skin (3) is completely removed and perforations or holes are formed in those parts of the vehicle part (1) that has a removed inner moulded skin.

9. Cover according to any of claims 5-8, **characterized in that** the inner moulded skin (3) is removed and/or perforations or holes are formed in those parts of the vehicle part (1) that have a removed inner moulded skin, and/or the inner moulded skin (3) is perforated, with the aid of a laser beam.

10. A vehicle provided with one or more covers according to any one of claims 5-9.

## Patentansprüche

1. Verfahren zur Herstellung einer porösen schallabsorbierenden Oberfläche eines Fahrzeug-Formteils (1) aus einem Polymermaterial, das Poren (5) enthält, mit einer geformten Haut (2, 3), wobei die geformte Haut als eine Kondensation des an der Oberfläche des Fahrzeug-Formteils während des Formverfahrens gebildeten Polymermaterials definiert ist, wobei das Verfahren umfasst:
- Entfernen wenigstens eines Teils der geformten Haut (2, 3) des Polymermaterials von dem Fahrzeug-Formteil (1) mithilfe eines von einer Lasereinheit emittierten Laserstrahls, wobei die Lasereinheit einen Laserstrahl emittiert, der von einer Steuereinheit gesteuert wird, wobei der Laserstrahl dafür programmiert ist, über die geformte Haut (2, 3) geführt zu werden, um eine Behandlung durchzuführen, durch die die geformte Haut (2, 3) des Fahrzeug-Formteils (1) teilweise oder vollständig von den Teilen des Fahrzeugteils (1) entfernt wird, die nicht mit Perforationen und/oder Löchern (6) versehen sind, und wobei das Verfahren an der geformten Haut (2, 3) des Fahrzeug-Formteils (1) durchgeführt wird, die in Verwendung der Fahrzeugkomponente zugewandt angeordnet sein soll, von der der Schall, der absorbiert oder gedämpft werden soll, emittiert wird.

2. Verfahren gemäß Anspruch 1, wobei der Fahrzeug-Formteil eine Abdeckung ist und die geformte Haut eine äußere geformte Haut und eine innere geformte Haut umfasst und wobei das Entfernen wenigstens eines Teils der geformten Haut Entfernen wenigstens eines Teils der inneren geformten haut umfasst, wobei die äußere geformte Haut (3) eine homogene geformte Haut bildet.

3. Verfahren gemäß Anspruch 1, wobei das Polymermaterial Polyurethan umfasst.

4. Verfahren gemäß Anspruch 1, wobei das Entfernen der geformten Haut (2, 3) durch die Lasereinheit durch Verdampfung erzielt wird, so dass das Polymermaterial nicht auf eine unkontrollierte Weise schmilzt, um die Entstehung einer neu geformten Haut mit einer harten Oberfläche zu verhindern.

5. Abdeckung, hergestellt gemäß einem der Ansprüche 1-5, zum Absorbieren von Schall und Lärm in einem Fahrzeug, umfassend:
eine äußere geformte Haut (2) und
eine innere geformte Haut (3), die in Verwendung einer Fahrzeugkomponente zugewandt angeordnet sein soll, von der der Schall, der absorbiert oder gedämpft werden soll, emittiert wird, und einen Kern (4), der zwischen der äußeren und der inneren geformten Haut (2, 3) angeordnet ist.

6. Abdeckung gemäß Anspruch 5, **dadurch gekennzeichnet, dass** die innere geformte Haut (3) vollständig entfernt ist.

7. Abdeckung gemäß Anspruch 5, **dadurch gekennzeichnet, dass** die innere geformte Haut (3) perforiert ist.

8. Abdeckung gemäß Anspruch 5, **dadurch gekennzeichnet, dass** die innere geformte Haut (3) vollständig entfernt ist und Perforationen oder Löcher in jenen Teilen des Fahrzeugteils (1) gebildet sind, die eine entfernte innere geformte Haut aufweisen.

9. Abdeckung gemäß einem der Ansprüche 5-8, **dadurch gekennzeichnet, dass** mithilfe eines Laserstrahls die innere geformte Haut (3) entfernt ist und/oder Perforationen oder Löcher in jenen Teilen des Fahrzeugteils (1) gebildet sind, die eine entfernte innere geformte Haut aufweisen, und/oder die innere geformte Haut (3) perforiert ist.

10. Fahrzeug, ausgestattet mit einer oder mehreren Abdeckungen gemäß einem der Ansprüche 5-9.

## Revendications

1. Procédé de création d'une surface poreuse absorbant le son d'une pièce de véhicule moulée (1) réalisée en matériau polymère contenant des pores (5) avec une peau moulée (2, 3), la peau moulée étant définie comme étant une condensation du matériau polymère formée à la surface de la pièce de véhicule moulée pendant le processus de moulage, le procédé comprenant :
- le retrait d'au moins une partie de la peau moulée (2, 3) du matériau polymère à partir de la pièce de véhicule moulée (1) à l'aide d'un faisceau laser émis depuis une unité laser,
dans lequel l'unité laser émet un faisceau laser qui est commandé par une unité de commande, le faisceau laser étant programmé pour être balayé sur la peau moulée (2, 3) afin d'effectuer un traitement par lequel la peau moulée (2, 3) de la pièce de véhicule moulée (1) est partiellement ou entièrement retirée des parties de la pièce de véhicule (1) qui ne sont pas pourvues de perforations et/ou de trous (6), et dans lequel le procédé est effectué sur la peau moulée (2, 3) de la pièce de véhicule moulée (1) qui doit être positionnée lors de l'utilisation face au composant de véhicule à partir duquel est émis le son qui doit être absorbé ou amorti.

2. Procédé selon la revendication 1, dans lequel la pièce de véhicule moulée est un couvercle et la peau moulée comprend une peau moulée externe et une peau moulée interne, et dans lequel le retrait d'au moins une partie de la peau moulée comprend le retrait d'au moins une partie de la peau moulée interne, dans lequel la peau moulée externe (3) constitue une peau moulée homogène.

3. Procédé selon la revendication 1, dans lequel le matériau polymère comprend du polyuréthane.

4. Procédé selon la revendication 1, dans lequel le retrait de la peau moulée (2, 3) par l'unité laser est obtenu par évaporation, de sorte que le matériau polymère ne fonde pas de manière incontrôlée afin d'éviter la formation d'une nouvelle peau moulée ayant une surface dure.

5. Couvercle fabriqué selon l'une quelconque des revendications 1 à 5 pour l'absorption du son et du bruit dans un véhicule, comprenant :
une peau moulée externe (2), et
une peau moulée interne (3) qui doit être positionnée lors de l'utilisation face à un composant de véhicule à partir duquel est émis le son à absorber ou à amortir, et une partie centrale (4) prévue entre les peaux moulées externe et interne (2, 3).

6. Couvercle selon la revendication 5, **caractérisé en ce que** la peau moulée interne (3) est complètement retirée.

7. Couvercle selon la revendication 5, **caractérisé en ce que** la peau moulée interne (3) est perforée.

8. Couvercle selon la revendication 5, **caractérisé en ce que** la peau moulée interne (3) est complètement retirée et des perforations ou trous sont formés dans les parties de la pièce de véhicule (1) dont la peau moulée interne est retirée.

9. Couvercle selon l'une quelconque des revendications 5 à 8, **caractérisé en ce que** la peau moulée interne (3) est retirée et/ou des perforations ou trous sont formés dans les parties de la pièce de véhicule (1) dont la peau moulée interne est retirée, et/ou la peau moulée interne (3) est perforée, à l'aide d'un faisceau laser.

10. Véhicule pourvu d'un ou de plusieurs couvercles selon l'une quelconque des revendications 5 à 9.
